# EUROPEAN PATENT APPLICATION

(11) **EP 3 153 600 A1**
(43) Date of publication of application: **12.04.2017**
(21) Application number: 15188600.9
(22) Date of filing: 06.10.2015
(51) Int. Cl.: C22F 1/04, B21D 1/00, B23P 15/00, C21D 8/02

(54) **METAL OBJECT PRODUCTION**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a method and apparatus for producing a metal object such as a component part of an aerospace vehicle. The method comprises: providing a metal worksheet (200); performing a heat treatment process, for example a solution treatment process, on the metal worksheet (200) thereby making the worksheet (200) more workable; performing a flattening process, for example a rolling process, on the heat treated metal worksheet (200); and, thereafter, performing a metalworking process on the flattened metal worksheet (200) to produce the metal object from the flattened metal worksheet (200). The method may further comprising, thereafter, performing a metal hardening process, for example a precipitation hardening or artificial age hardening process, on the produced metal object.

## Description

### FIELD OF THE INVENTION

The present invention relates to the production of metal objects.

### BACKGROUND

In the manufacture of metal objects, such as sheet metal fabrication for producing aircraft component parts, the metal objects may be cut to profile and subsequently solution heat treated, before going on to be formed to shape.

In an example process, EN 2395 aluminium alloy is solution treated by heat soaking the object at 505°C ± 5°C for 20 minutes. Solution heat treatment causes one or more of the alloy constituents to enter into solid solution. The alloy is then cooled rapidly in a water based quenching liquid to hold these alloy constituents in solution. This improves the workability of the of the alloy material, and allows for a limited working time period during which the object may be worked. For example, solution heat treatment may provide a working time period of approximately two hours for an EN 2395 aluminium alloy object, when that object is processed under ambient conditions.

The solution treatment process and subsequent quenching tends to cause deformation of previously flat objects. This tends to be especially true for larger component parts.

Typically, rolling is performed to restore objects that have been deformed by the solution treatment and subsequent quenching process to a flat state. Rolling is a metal forming process in which a metal object is passed through a series of opposing rollers.

Rolling an object tends to slightly deform that object, for example, by reducing the object's thickness, and elongating the object. This may lead to inaccuracies of the produced objects.

### SUMMARY OF THE INVENTION

In a first aspect, the present invention provides a method of producing a metal object. The method comprises: providing a metal worksheet; performing a heat treatment process on the metal worksheet thereby making the worksheet more workable; performing a flattening process on the heat treated metal worksheet; and, thereafter, performing a metalworking process on the flattened metal worksheet to produce the metal object from the flattened metal worksheet.

Modern digital manufacturing methods may be implemented to facilitate this level of post working and allow objects to be manufactured and completed within predetermined time period. Advantageously, objects manufactured by this method can be produced with, for example, accurate holes and other features that are at a finished size. These parts can undergo assembly without recourse to further manufacturing processes. This tends to have significant cost and quality benefits downstream in the manufacture of, for example, an air vehicle or any such structure that uses these objects. This process tends to facilitate the manufacture of assemblies that can meet high accuracy interchangeability requirements, and tend to facilitate jigless manufacture of aircraft assemblies.

The method may further comprise, thereafter, performing a metal hardening process on the produced metal object. For example, a precipitation hardening process or artificial age hardening process may be performed.

The heat treatment process may be a solution treatment process. The heat treatment process may include a quenching process. The heat treatment may be performed to allow the worksheet to be fully worked without cracking, and within constraints of an aerospace manufacturing specification.

The solution treatment process may include heating the metal worksheet to between 465°C and 535°C.

The method may further comprise, after the flattening process, cooling the metal worksheet to at or below a threshold temperature.

The threshold temperature may be approximately -40°C.

The metalworking process may be performed in an environment having a temperature above the threshold temperature. The metalworking process may be completed within a predetermined time period (i.e. a "working life" of the material) from a time at which the worksheet is introduced to the environment. The predetermined time period may be dependent on the temperature of the environment. The predetermined time period may be approximately 2hrs.

The heat treatment process may be a reversion heat treatment process.

The reversion process may include heating the metal worksheet to between 175°C and 185°C.

The metalworking process may include one or more processes selected from the group of processes consisting of: laser cutting, sheet metal punching, metal folding, part marking, hole forming, pattern forming, embossing, coining, forming stiffening features, forming flanges, forming alignment features, forming semi-sheared features, threaded hole forming, flanged lightening, joining and deburring.

The metal worksheet may be made of an aerospace grade aluminium alloy such as EN 2395 or similar alloy, or an aerospace grade aluminium-lithium alloy or similar.

The metal worksheet may be made of an aluminium-copper alloy. The metal worksheet may be made of 2000, 6000, or 7000 series aluminium alloy.

The metal object may be a component part of an aerospace vehicle.

The flattening process may include a straightening process. The flattening process may include, but is not limited to, a rolling process and/or a stretch forming process. The rolling process may be a metalworking process in which the worksheet (which is more workable after having undergone a heat treatment process) is passed through pairs of rollers, which may restore the worksheet to a flattened state in preparation for follow-on manufacturing processes, e.g. folding, punching, or pressing processes.

Flattening the worksheet may induce a degree of stretching in the material. Because no parts have been extracted from the worksheet at this stage, this stretching tends to have no bearing on the dimensional accuracy of the object produced from said worksheet.

The metal object may comprise a plurality of different items connected together on a sprue. The plurality of different items may be component parts of a common assembly. The method may further comprise detaching the items from the sprue and assembling the detached items together to form the common assembly. Each item may comprise one or more through holes. Assembling the items together may comprise aligning the items together using the through holes. The metalworking process may include marking each of the different items with a respective identifier.

In a further aspect, the present invention provides a system for producing a metal object. The system comprises: heat treatment apparatus for performing a heat treatment process on a provided metal worksheet; flattening apparatus for performing a flattening process on the heat treated metal worksheet; and metalworking apparatus for, thereafter, performing a metalworking process on the flattened metal worksheet to produce the metal object from the flattened metal worksheet.

The metalworking apparatus may include one or more computer numerical control robots selected from the group of computer numerical control robots consisting of: a laser cutting robot, a sheet metal punching robot, and a metal folding robot.

In a further aspect, the present invention provides a metal object formed by a process comprising the steps of: performing a heat treatment process on a metal worksheet; performing a flattening process on the heat treated metal worksheet; and, thereafter, performing a metalworking process on the flattened metal worksheet to produce the metal object from the flattened metal worksheet. The metal object tends to be forensically differentiable from conventionally produced metal objects.

The metal object may be a component part of an aerospace vehicle.

### BRIEF DESCRIPTION OF THE DRAWINGS

Figure 1 is a schematic illustration (not to scale) showing a system for producing a component part of an aircraft;
Figure 2 is a schematic illustration (not to scale) showing an example sheet metal workpiece;
Figure 3 is a schematic illustration (not to scale) showing an example component part of an aircraft;
Figure 4 is a process flow chart showing certain steps of a process of producing the component part;
Figure 5 is a process flow chart showing certain steps of a process of preparing the sheet metal workpiece;
Figure 6 is a process flow chart showing certain steps of a process of producing an initial component from the prepared sheet metal workpiece; and
Figure 7 is a process flow chart showing certain steps of a process of hardening the initial component.

### DETAILED DESCRIPTION

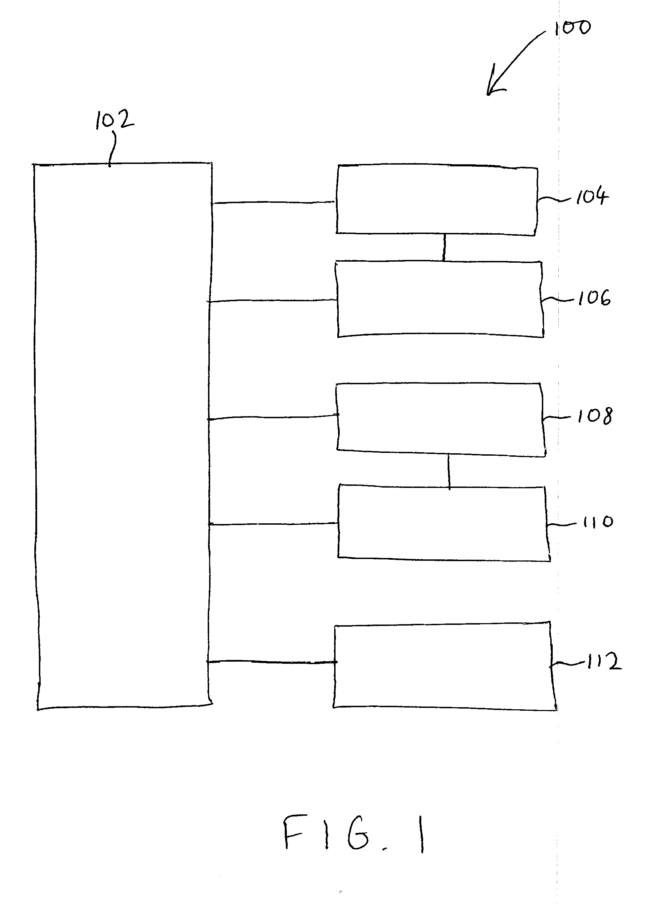

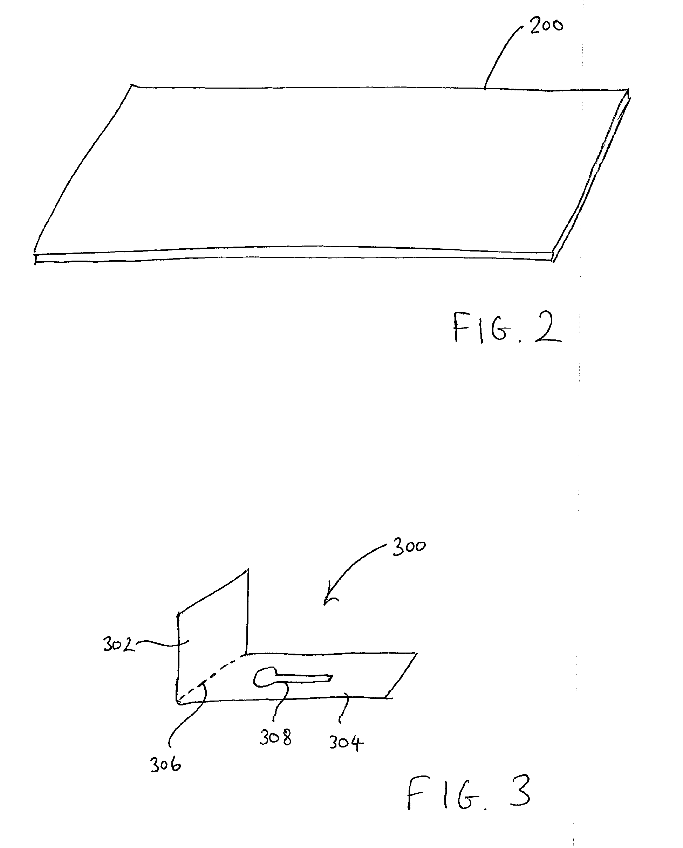

Figure 1 is a schematic illustration (not to scale) showing a system 100 for producing a component part of an aircraft. The component part of the aircraft that is to be produced is described in more detail later below with reference to Figure 3.

In this embodiment, the system 100 comprises a storage module 102, a solution treatment module 104, a sheet metal rolling module 106, a sheet metal punching module 108, a sheet metal folding module 110, and a metal hardening module 112.

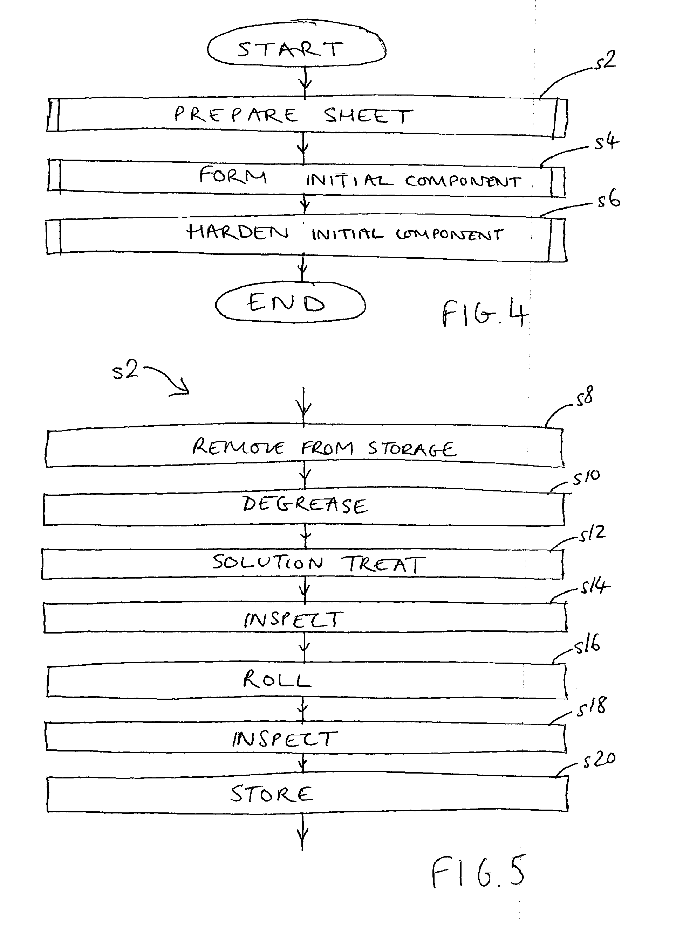

The storage module 102 is configured to store items including, but not limited to, sheet metal from which the aircraft component is to be produced, and aircraft components at various stages of production. The storage module 102 may store items at a range of different temperatures. Examples of storage modules include, but are not limited to, the TruStore (Trademark) storage system. Further information on temperatures at which the storage module 102 may store items is provided in more detail later below with reference to Figure 4 to 7. In this embodiment, the storage module 102 is coupled to the solution treatment module 104, the sheet metal rolling module 106, the sheet metal punching module 108, the sheet metal folding module 110, and the precipitation hardening module 112 such that items may be sent between the storage module 102 and each of those other modules 104-112.

The solution treatment module 104 comprises a solution treatment machine or machines configured to perform a solution treatment process on items received by the solution treatment module 104 from the storage module 102. The solution treatment process is described in more detail later below with reference to Figures 4 and 5. The solution treatment module 104 is coupled to the sheet metal rolling module 106 such that solution treated items may be sent from the solution treatment module 104 to the sheet metal rolling module 106.

The sheet metal rolling module 106 comprises a sheet metal rolling machine or machines configured to perform a metal rolling process on sheet metal received by the sheet metal rolling module 106 from the solution treatment module 104. Hot rolling or cold rolling may be performed. In this embodiment, the metal rolling process comprises passing metal stock through one or more pairs of opposing rollers, thereby flattening the metal. The metal may be lengthened by the rolling process. Preferably, rolling machine or machines are configured to output sheet metal having substantially the same thickness as the pre-solution treatment sheet metal. In some embodiments, the rollers may be controlled such that the thickness of the rolled metal stock may be varied.

The sheet metal punching module 108 comprises a computer numerical control (CNC) metal punching machine or machines configured to perform a metal punching process on items received by the sheet metal punching module 108 from the storage module 102. In this embodiment, the metal punching process comprises using a punch press to force a punch tool through a sheet metal workpiece to create a hole via shearing. The punch is forced through the sheet metal workpiece into a die. In some embodiments, one or more specially shaped punches may be used to create certain features or perform certain operations, for example, part marking, holing, forming shaped holes and patterns, embossing, coining, forming stiffening features, forming flanges, forming alignment features, forming sheared features, forming holes, forming lightening holes, and deburring of edges. The sheet metal punching module 108 is coupled to the sheet metal folding module 110 such that punched items may be sent from the sheet metal punching module 108 to the sheet metal folding module 110.

The sheet metal folding module 110 comprises a computer numerical control (CNC) metal folding machine or machines configured to perform a metal folding process on items received by the sheet metal folding module 110 from the sheet metal punching module 108. Examples of metal folding machines include, but are not limited to, metal folding robots such as TruBend (Trademark) press brakes. Air Bending, Bottoming and Coining press brakes may be used. In this embodiment, the metal folding process comprises positioning a sheet metal workpiece over a die block and then pressing the sheet metal workpiece around the die block thereby to fold the workpiece.

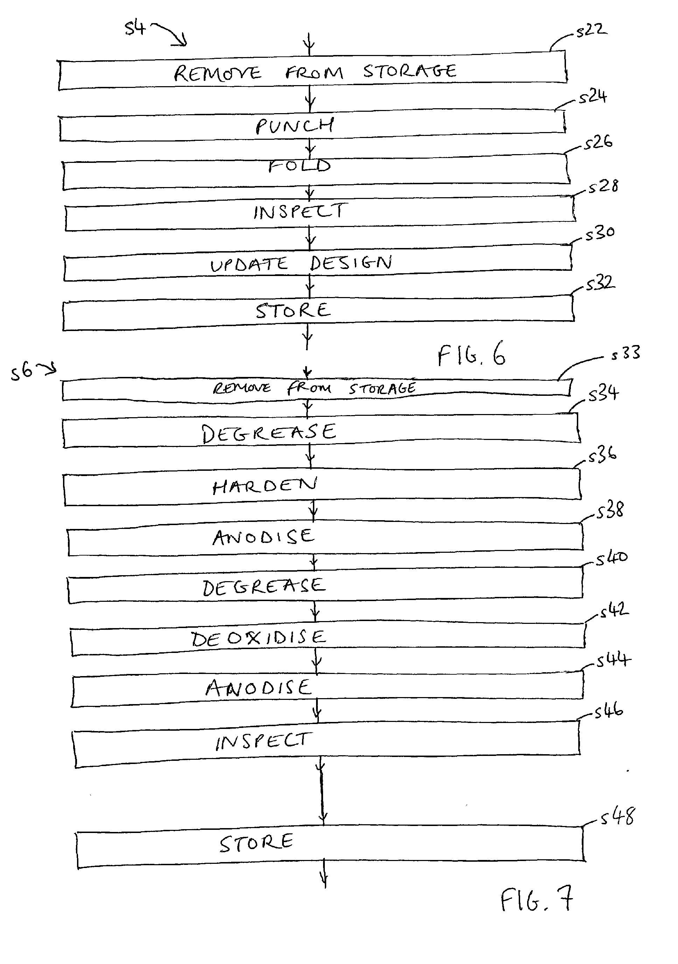

The metal hardening module 112 is configured to perform a precipitation hardening process on items received by the metal hardening module 112 from the storage module 102. The precipitation hardening process is described in more detail later below with reference to Figures 4 and 7.

Figure 2 is a schematic illustration (not to scale) showing an example sheet metal workpiece 200 that is to be processed by the system 100 so as to form a plurality of component parts of an aircraft. In this embodiment, the sheet metal workpiece 200 is made of an aluminium-copper alloy such as EN 2395. Preferably, the sheet metal workpiece 200 has substantially uniform thickness.

Figure 3 is a schematic illustration (not to scale) showing a component part of an aircraft, hereinafter referred to as a "component" and indicated by the reference numeral 300, to be formed from the sheet metal workpiece 200 by the system 100.

In this embodiment, the component 300 comprises a first portion 302 defining a first end of the component 300, and a second portion 304 defining a second end of the component 300. The first portion 302 and the second portion 304 are different areas of a single elongate strip of metal.

The component 300 further comprises a fold 306 between the first portion 302 and the second portion 304 such that the first portion 302 is oblique (e.g. perpendicular) to the second portion 304.

The component 300 further comprises a keyhole 308 formed through the second portion 304. The keyhole 308 is for receiving a key-shaped member formed in a different aircraft component to facilitate the attachment together of the component 300 and the different aircraft component.

In this embodiment, multiple components 300 are produced from the single sheet metal workpiece 200.

Apparatus, including computers for controlling one or more of the modules 102-112 of the system 100, for implementing the above arrangement, and performing one or more of the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 4 is a process flow chart showing certain steps of a process of producing, by the system 100, from the sheet metal workpiece 200, the component 300.

At step s2, a preparation process is performed on the sheet metal workpiece 200. The preparation process performed at step s2 is described in more detail later below with reference to Figure 5.

At step s4, an "initial component" is produced from the prepared sheet metal workpiece 200. Production of the initial component from the sheet metal workpiece 200 is described in more detail later below with reference to Figure 6. In this embodiment, an "initial component" is in a more workable condition following a solution heat treatment process.

At step s6, a hardening process is performed on the initial component, thereby producing the component 300. The hardening process is described in more detail later below with reference to Figure 7.

Thus, a process of producing the component 300 is provided.

Returning now to the description of step s2, Figure 5 is a process flow chart showing certain steps of a process of preparing the sheet metal workpiece 200.

Initially, the sheet metal workpiece 200 is stored at the storage module 102, for example, at temperature between 10°C and 30°C (e.g. ambient temperature of the environment in which the storage module 102 operates).

At step s8, the storage module 102 sends the sheet metal workpiece 200 to the solution treatment module 104. Transportation of the sheet metal workpiece 200 to the solution treatment module 104 may be performed automatically or by a human operator.

At step s10, the solution treatment module 104 degreases the sheet metal workpiece 200. Degreasing of the sheet metal workpiece 200 may be performed automatically or by a human operator. The sheet metal workpiece 200 may be degreased according to any appropriate standard using any appropriate aerospace approved detergent.

At step s12, the solution treatment module 104 solution treats the sheet metal workpiece 200. In this embodiment, solution treating the sheet metal workpiece 200 comprises heating the sheet metal workpiece 200 to a predetermined temperature (e.g. 505°C ± 5°C), and holding the sheet metal workpiece 200 at that temperature for sufficient time to induce one or more of the constituents of the sheet metal workpiece 200 to enter into solid solution. The sheet metal workpiece 200 is then cooled rapidly to hold the constituents of the sheet metal workpiece 200 in solution. The sheet metal workpiece 200 may be solution treated according to any appropriate standard.

At step s14, a human operator inspects the solution treated sheet metal workpiece 200 to check that it conforms to a predetermined set of criteria. In some embodiments, the solution treated sheet metal workpiece 200 is inspected automatically. If the inspection is passed, the method proceeds to step s16. However, if the inspection failed, the process of Figure 4 may be restarted or the workpiece 200 may be scrapped.

Solution treating the sheet metal workpiece 200 tends to bend and distort the sheet metal workpiece 200 such that it is no longer a flat sheet of material. In other words, solution treatment tends to cause the previously flat (i.e. having a level surface without raised areas or indentations) workpiece 200 to warp, and become non-flat.

Solution treating the sheet metal workpiece 200 tends to make the workpiece 200 more workable, e.g., by softening the workpiece 200. Thus, the solution treated sheet metal workpiece 200 is more workable relative to the sheet metal workpiece 200 prior to the solution treatment process.

At step s16, the solution treatment module 104 sends the solution treated sheet metal workpiece 200 to the sheet metal rolling module 106. The sheet metal rolling module 106 rolls the solution treated sheet metal workpiece 200 by passing the sheet metal workpiece 200 through one or more pairs of opposing rollers. Thus, the sheet metal workpiece 200 is flattened.

In an alternative embodiment, a worksheet may be flattened/straightened by stretch forming which may comprise mechanically gripping the sheet at opposite ends and stretching the sheet (e.g. by <5% of its total length) to straighten the sheet.

At step s18, a human operator inspects the rolled sheet metal workpiece 200 to check that it conforms to a predetermined set of criteria. In some embodiments, the rolled sheet metal workpiece 200 is inspected automatically. If the inspection is passed, the method proceeds to step s20. However, if the inspection failed, the process of Figure 4 may be restarted or the workpiece 200 may be scrapped.

At step s20, the sheet metal rolling module 106 sends the rolled sheet metal workpiece 200 to the storage module 102. The storage module 102 stores the more workable rolled sheet metal workpiece 200 at a predetermined temperature. Preferably, the rolled sheet metal workpiece 200 is stored at or below-40°C. Advantageously, it tends to be possible to store the rolled sheet metal workpiece 200 in this way for long periods of time. Storage at higher temperatures may be possible, however but this will tend to reduce the allowable storage time and/or working time period of the object. Storing the rolled sheet metal workpiece 200 at a relatively low temperature (e.g. -40°C or lower) advantageously tends to retain the sheet metal workpiece 200 in its flattened, relatively workable (i.e. softened) state, which is also known as its T4 condition. Age hardening of the sheet metal workpiece 200 tends to be substantially arrested by the low temperature storage.

Thus, a process of preparing the sheet metal workpiece 200 as performed at step s2 is provided.

Returning now to the description of step s4, Figure 6 is a process flow chart showing certain steps of a process of producing an initial component from the prepared sheet metal workpiece 200.

Initially, the prepared sheet metal workpiece 200 is being stored by the storage module 102 at a relatively low temperature, preferably at -40°C or less.

In this embodiment, steps s22 to s26 of the process of Figure 6 are performed in an environment that has an ambient temperature of typically between 10°C and 30°C. Preferably, steps s22 to s26 are all performed within a predetermined time period so as to ensure that the sheet metal workpiece 200 does not significantly heat up and harden, thereby becoming undesirably brittle.

In this embodiment, steps s22 to s26 are all performed while the material remains in its workable (T4) condition. Age hardening of the sheet metal workpiece 200 tends to start at the moment the workpiece 200 is subjected to temperatures above -40°C. The rate of age hardening tends to be proportional to the temperature of the working environment.

In this embodiment, once the working life of the workpiece 200 has been used, no further shaping processes are permitted to be performed on the workpiece 200. In some embodiments, once the working life of the workpiece 200 has been used further solution treatment processes may be performed on the workpiece 200, to re-soften the workpiece 200 may improve its workability.

It tends to be desirable to perform steps s22 to s26 while the temperature of the prepared sheet metal workpiece 200 is relatively low as this tends to extend the working life of the workpiece 200 considerably and the prepared sheet metal workpiece 200 tends to remain in its T4 condition.

Preferably, the predetermined time period in which steps s22 to s26 are performed is less than or equal to 2 hours in total. In some embodiments, one or more of steps s22 to s26 of the process of Figure 6 are performed in a low temperature environment, e.g., at an ambient temperature of -40°C. In some embodiments, the sheet metal workpiece 200 is returned to low temperature storage between subsequent process steps, for example between steps s22 and s24 and/or between steps s24 and s26.

At step s22, the storage module 102 sends the prepared sheet metal workpiece 200 to the sheet metal punching module 108. Transportation of the prepared sheet metal workpiece 200 to the sheet metal punching module 108 may be performed automatically or by a human operator.

At steps s24, the sheet metal punching module 108 performs a metal punching process on the prepared sheet metal workpiece 200. In this embodiment, a punch press repeatedly forces a punch tool through the prepared sheet metal workpiece 200 so as to cut out the keyhole 308 shape, followed by the component 300 profile shape from the prepared sheet metal workpiece 200. The prepared sheet metal workpiece 200 being in the T4 condition tends to facilitate the punch process. For example, the likelihood of wear on the punch tool 200 tends to be reduced. In some embodiments, a keyhole-shape punch is used to form the keyhole 308. In some embodiments, a blanking process is performed to simultaneously punch a plurality of components 300 from the prepared sheet metal workpiece 200. In some embodiments, a punch is used to "score" along a line of the fold 306, thereby facilitating the subsequent folding process. After the punching process is complete, the sheet metal punching module 108 sends the sheet metal component (i.e. the unfolded or flat form of the component 300) to the sheet metal folding module 110.

In this embodiment, punching process may include punching holes of any appropriate size and shape at least partially through the prepared sheet metal workpiece 200 (e.g. fully through the workpiece 200), punching the profile of the component 300, deburring one or more edges, and/or stamping a component identifier, timestamp and/or other information onto the component 300.

At step s26, the sheet metal folding module 110 performs a metal folding process on the received sheet metal component. In this embodiment, the sheet metal component is positioned over a die block, and pressed such that the sheet metal component folds along the fold line 306, thereby moving the first portion 302 and second portion 304 to be at a predetermined angle relative to one another. Thus, the initial component is formed.

The prepared sheet metal workpiece 200 being in the T4 condition tends to facilitate the folding process, for example, the likelihood bending of a tight radii without developing surface cracks in the component 300 tends to be reduced.

At step s28, a human operator inspects the produced initial component to check that it conforms to a predetermined set of criteria. In some embodiments, the initial component is inspected automatically.

In this embodiment, at least the first component 300 produced is inspected. Batch testing of subsequently produced components 300 may be performed. Advantageously, use of CNC robots tends to provide that components 300 are produced with high accuracy and repeatability, thus reducing or eliminating a need to inspect every component 300 that is produced. Once the process has passed a strict first article verification inspection (FACI) to confirm all operational parameters have been set up correctly, inspections may be relaxed as confidence in the process is achieved and demonstrated.

At step s30, depending on an outcome of the inspection process of step s28, one or more digital models that are used to control the CNC punch machine(s) of the sheet metal punching module 108 and/or the CNC folding machine(s) of the sheet metal folding module 110 may be updated. This control loop process may be implemented to refine the production process and ensure all produced components 300 are within a desired tolerance.

At step s32, the sheet metal folding module 110 sends the initial component (that has passed the inspection of step s28) to the storage module 102.

Thus, a process of producing an initial component from the prepared sheet metal workpiece 200 as performed at step s4 is provided.

Returning now to the description of step s6, Figure 7 is a process flow chart showing certain steps of a process of hardening the initial component.

At step s33, the storage module 102 sends the initial component to the metal hardening module 112. Transportation of the initial component to the metal hardening module 112 may be performed automatically or by a human operator.

At step s34, the metal hardening module 112 degreases the initial component. Degreasing of the initial component may be performed automatically or by a human operator. The initial component may be degreased according to any appropriate standard using any appropriate aerospace approved detergent.

At step s36, the metal hardening module 112 performs a precipitation hardening process on the degreased initial component. In this embodiment the EN 2395 Aluminium alloy material, the degreased initial component is heated to a predetermined temperature (for example 175°C) for a predetermined time period (for example between 9hrs and 12hrs, e.g. 10hrs). Different parameters may be used for different alloys. Precipitation hardening comprises heating the degreased initial component so as to cause one or more of its constituents to precipitate from solid solution, thereby inducing an appreciable increase in strength and/or hardness. Precipitation hardening may be performed according to any appropriate standard.

At step s38, the metal hardening module 112 anodises the hardened initial component.

At step s40, the metal hardening module 112 degreases the anodised initial component.

At step s42, the metal hardening module 112 deoxidises the degreased initial component.

At step s44, the metal hardening module 112 anodises the deoxidised initial component. Thus, the component 300 is formed.

At step s46, a human operator inspects the produced component 300 to check that it conforms to a predetermined set of criteria. In some embodiments, the component 300 is inspected automatically. If the inspection is passed, the method proceeds to step s48. However, if the inspection failed, the component 300 may be scrapped.

At step s48, the metal hardening module 112 sends to produced component 300 to the storage module 102.

Thus, a process of hardening the initial component and thereby producing the component 300 is provided.

An advantage provided by the above described system and method is that items may be produced quickly, cheaply, and with high accuracy. Use of highly accurate punching and folding robots advantageously tends to reduce or eliminate a need for inspection.

The above described system and method advantageously tends to reduce or eliminate a need for tool lugs to be formed as part of produced items. This tends to reduce wastage as more items can be produced from a given sheet metal workpiece.

The above described system and method advantageously tends to facilitate the forming of certain features of a produced item.

For example, attachment features, such as keyholes, that allow for the easy attachment of two items may be easily formed. This tends to facilitate the assembly of systems such as aircraft that include multiple component parts, as the component parts may be easily attached together. Attaching together two items using their respective attachment features may align those two items in a predetermined desired alignment. Thus, the use of assembly jigs for assembling systems of components tend to be reduced.

Other examples of easily formed features include, but are not limited to, stiffening or strengthening features such as stiffening swages (i.e. grooves or ridges). This tends to reduce or eliminate the use of separate stiffening components that tend to add weight to assembled systems of components.

The above described sheet metal punching module and the sheet metal folding module are advantageously reconfigurable.

Advantageously, a "kit of parts" for a system, for example, an aircraft sub-assembly, may be produced. Such kits may, for example, be produced and held within one or more worksheets, i.e. as parts on a sprue. The component parts may be retained on the worksheet(s) until ready for assembly, at which point they may be removed. This tends to allow for the easy painting, transportation and storage of the kit sets, and easy visual checking of the assembly build parts.

Advantageously, the above described metal hardening process may be performed on multiple items simultaneously. For example, one or more kits of parts, each formed on a single workpiece, may be hardened simultaneously. Thus, costs tend to be reduced.

Conventionally, metal objects may be produced by routing/cutting parts from a sheet and then subsequently heat treating and rolling those parts. This part-level heat treatment and rolling tends to deform the produced part leading to inaccuracies in the produced items. By solution treating and rolling/flattening at a worksheet level, prior to any of the item features being formed, introduction of these inaccuracies tends to be avoided.

For example, conventionally, rolling an object tends to slightly deform that object (e.g. by reducing the object's thickness and elongating the object). This may lead to inaccuracies within objects, especially features such as pre-drilled holes. These inaccuracies may lead the predrilled holes not being fit for purpose. For example, when two parts with predrilled holes are to be assembled together, the inaccuracies in the predrilled holes may mean that the predrilled holes do not aligned correctly when the parts are positioned as desired. Conventionally, to address this problem, holes in an object are first provided as smaller size pilot holes, that are then drilled to be full size holes during assembly. The pilot holes tends not to be useful for aligning parts that are to be assembled together. Thus, jigs are employed to hold all parts in the correct position before the pilot holes are drilled to full size. This is a very time consuming process. Assembly may be limited by the availability of assembly jigs. Also, assembly jigs tend to be expensive to produce and maintain. The above described system and method advantageously tends to overcome these issues by providing allowing for parts having accurate full size holes to be produced. In the above described method, processes that cause distortion of the worksheet tends to occur before the parts are cut from the worksheet. This is in contrast to conventional processes in which parts are cut from the worksheet and subsequently distorted. A need for assembly jigs tends to be reduced since the full size holes in the parts may be used to correctly align those parts for assembly.

Advantageously, the above described process tends to have a reduced number of process steps compared to conventional methods. Manufacturing activities are consolidated to a single machine. Also, multiple parts may be processed simultaneously.

Advantageously, the above described process may include adding identifiers, such as part/batch numbers, at the beginning of the process. This tends to reduce effort associated with sorting parts, and also the potential for errors made by incorrect identification of very similar looking parts. Thus, costs tend to be reduced.

It should be noted that certain of the process steps depicted in the flowchart of Figures 4 to 7 and described above may be omitted or such process steps may be performed in differing order to that presented above and shown in Figures 4 to 7. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, a component part of an aircraft is produced. However, in other embodiments one or more different types of item or object is produced instead of or in addition to the aircraft component part.

In the above embodiments, the component includes a fold and a keyhole. However, in other embodiments a produced item includes one or more further folds and/or one or more further keyholes. In some embodiments, a produced item includes one or more different features instead of or in addition to the fold and/or the keyhole. Examples of other features that may be formed in an item include, but are not limited to, part marks/identifiers, holes, shaped holes, patterns, embossed areas, coined areas, stiffening features, flanges, alignment features, semi-sheared features, threaded holes, flanged lightening holes, deburred edges. In some embodiments, features such as folds and keyholes are omitted.

In the above embodiments, produced objects are formed from metal. In particular, the component is produced from EN 2396 aluminium alloy. However, in other embodiments a different material is used. For example, a different aluminium-copper alloy may be used. Also, a material such as stainless steel, or titanium sheet may be used. Also, a plastic material may be used.

In some embodiments, an aluminium-lithium alloy, such as "2198" is used. Alternative aluminium-lithium alloys include but are not limited to 2195, 2196, 2297, 2098, 2198, 2099, 2199, 2050, 2296, 2060, 2055, 2065 and 2076 series alloys. Such aluminium-lithium alloys tends to be stable and workable at room temperature compared to aerospace grade aluminium-copper alloys such as EN 2395. Thus, the above described solution treatment process, water quenching flattening operations may be omitted. Furthermore, low temperature storage of workpieces may be omitted. Hardening/strengthening process, similar to the above described precipitation hardening process, may be performed to harden/strengthen the produced items, for example, after they have been punched and folded.

In the above embodiments, a punching process is used to punch the component blank from the worksheet. However, in other embodiments a punching process is not performed. For example, in some embodiments the punching process is omitted and a component is formed by folding an unpunched/uncut workpiece. In some embodiments, a different type of cutting process, for example laser cutting, is used instead of or in addition to the punching process.

In the above embodiments, a folding process is used to fold metal items. However, in other embodiments a folding process is not performed. In some embodiments, one or more folding operations are performed by the punching machines. For example, the metal punching module may be used to fold parts.

In the above embodiments, a solution treatment process is performed to improve workability of the workpiece to facilitate the punching and folding operations. However, in other embodiments, one or more different process, such as a different type of heat treatment, may be performed to make the material and hence workpiece more workable instead of or in addition to the solution treatment process. For example, in some embodiments, a reversion heat treatment is applied to the worksheet. A reversion heat treatment typically involves rapidly heating the worksheet to a lower temperature compared to the solution treatment process. For example, a worksheet may be heated to 175°C to 185°C (e.g. 180°C) as opposed to 505°C. A reversion heat treatment typically involves heating the worksheet for a shorter duration compared to the solution treatment process. For example, a worksheet may be heated for 10mins as opposed to for 20mins. A reversion heat treatment typically involves heating up the worksheet rapidly, compared to the heating rate in a solution treatment process. For example, the worksheet may be heated from room temperature (e.g. approximately 20°C) to between 175°C and 185°C within a 2min time period. A reversion heat treatment typically involves, after heating has been applied to the worksheet, rapidly cooling the worksheet compared to the cooling rate in a solution treatment process. A water based quenching process may be used to rapidly cool the worksheet. Advantageously, metallic worksheets that undergo a reversion heat treatment tend to be workable and stable under ambient conditions, i.e. at room temperature (e.g. approximately 20°C). Thus, low temperature storage of parts tends to be avoided or reduced. This tends to be in contrast to worksheets that undergo a solution treatment heat treatment, which tends to begin to age harden at temperatures above -40°C.

## Claims

1. A method of producing a metal object, the method comprising:
providing a metal worksheet (200);
performing a heat treatment process on the metal worksheet (200);
performing a flattening process on the heat treated metal worksheet (200); and,
thereafter, performing a metalworking process on the flattened metal worksheet (200) to produce the metal object from the flattened metal worksheet (200).

2. A method according to claim 1, the method further comprising, thereafter, performing a metal hardening process on the produced metal object.

3. A method according to claim 1 or 2, wherein the heat treatment process is a solution treatment process.

4. A method according to claim 3, wherein the solution treatment process includes heating the metal worksheet (200) to between 465°C and 535°C.

5. A method according to any of claims 1 to 4, wherein the method further comprises, after the flattening process, cooling the metal worksheet (200) to at or below a threshold temperature.

6. A method according to claim 5, wherein the threshold temperature is -40°C.

7. A method according to claim 5 or 6, wherein the metalworking process is performed in an environment having a temperature above the threshold temperature, and the metalworking process is completed within a predetermined time period from a time at which the worksheet (200) is introduced to the environment.

8. A method according to claim 7, wherein the predetermined time period is 2hrs.

9. A method according to claim 1 or 2, wherein the heat treatment process is a reversion heat treatment process.

10. A method according to claim 9, wherein the reversion process includes heating the metal worksheet (200) to between 175°C and 185°C.

11. A method according to any of claims 1 to 10, wherein the metalworking process includes one or more processes selected from the group of processes consisting of: laser cutting, sheet metal punching, metal folding, part marking, hole forming, pattern forming, embossing, coining, forming stiffening features, forming flanges, forming alignment features, forming semi-sheared features, threaded hole forming, flanged lightening, joining, and deburring.

12. A method according to any of claims 1 to 11, wherein the metal worksheet (200) is made of an aluminium-copper alloy.

13. A method according to any of claims 1 to 12, wherein the metal object is a component part of an aerospace vehicle.

14. A system for producing a metal object, the system comprising:
heat treatment apparatus (104) for performing a heat treatment process on a provided metal worksheet (200);
flattening apparatus (106) for performing a flattening process on the heat treated metal worksheet (200); and
metalworking apparatus (108, 110) for, thereafter, performing a metalworking process on the flattened metal worksheet (200) to produce the metal object from the flattened metal worksheet (200).

15. A metal object formed by a process comprising the steps of:
performing a heat treatment process on a metal worksheet (200);
performing a flattening process on the heat treated metal worksheet (200); and,
thereafter, performing a metalworking process on the flattened metal worksheet (200) to produce the metal object from the flattened metal worksheet (200).
